# EUROPEAN PATENT SPECIFICATION

(11) **EP 3 401 846 B1**
(45) Date of publication and mention of the grant of the patent: **01.02.2023**
(21) Application number: 17170045.3
(22) Date of filing: 09.05.2017
(51) Int. Cl.: G06N 3/04, G06F 9/50

(54) **METHOD AND DEVICE FOR ANALYZING SENSOR DATA**
VERFAHREN UND VORRICHTUNG ZUR ANALYSE VON SENSORDATEN
PROCÉDÉ ET DISPOSITIF D'ANALYSE DE DONNÉES DE CAPTEUR

(43) Date of publication of application: 14.11.2018
(73) Proprietor: Nokia Technologies Oy, 02610 Espoo (FI)
(72) Inventor: MATHUR, Akhil, Cambridge, Cambridgeshire CB3 0FA (GB); LANE, Nicholas, Cambridge, Cambridgeshire CB3 0FA (GB); BHATTACHARYA, Sourav, Cambridge, CB3 0FA (GB); KAWSAR, Fahim, Cambridge, Cambridgeshire CB3 0FA (GB)
(74) Representative: Nokia EPO representatives

(56) References cited:
- RHU MINSOO ET AL: "vDNN: Virtualized deep neural networks for scalable, memory-efficient neural network design", 2016 49TH ANNUAL IEEE/ACM INTERNATIONAL SYMPOSIUM ON MICROARCHITECTURE (MICRO), IEEE, 15 October 2016 (2016-10-15), pages 1-13, XP033022464, DOI: 10.1109/MICRO.2016.7783721 [retrieved on 2016-12-14]
- NICHOLAS LANE ET AL: "DXTK: Enabling Resource-efficient Deep Learning on Mobile and Embedded Devices with the DeepX Toolkit", PROCEEDINGS OF THE THE 8TH EAI INTERNATIONAL CONFERENCE ON MOBILE COMPUTING, APPLICATIONS AND SERVICES, 1 December 2016 (2016-12-01), XP055421674, DOI: 10.4108/eai.30-11-2016.2267463 ISBN: 978-1-63190-137-9
- VIVIENNE SZE ET AL: "Efficient Processing of Deep Neural Networks: A Tutorial and Survey", ARXIV.ORG, CORNELL UNIVERSITY LIBRARY, 201 OLIN LIBRARY CORNELL UNIVERSITY ITHACA, NY 14853, 27 March 2017 (2017-03-27), XP080759895,
- SURENDRA BYNA ET AL: "Taxonomy of Data Prefetching for Multicore Processors", JOURNAL OF COMPUTER SCIENCE AND TECHNOLOGY, KLUWER ACADEMIC PUBLISHERS, BO, vol. 24, no. 3, 26 May 2009 (2009-05-26), pages 405-417, XP019691796, ISSN: 1860-4749

## Description

### FIELD OF THE INVENTION

The present invention relates to the field of data analysis. In particular, the present invention relates to techniques for analyzing sensor data by executing multiple neural networks on a processing resources-constrained device.

### BACKGROUND

Computer-vision based wearable and Internet of Things (IoT) devices enable a range of novel services for the end-users, including cognitive assistance, mobile health, physical analytics and memory augmentation. For example, a home monitoring solution captures the video/audio feed of a home environment and analyzes it to infer unusual activities (e.g., intrusions), and/or performs face recognition to alert users about any strangers. This type of application relies on advancements in the area of Deep Learning which has made it possible for these devices to accurately analyze images and videos captured by them. For example, for tasks such as detecting and recognizing a face in an image, or locating an image geographically - deep learning models are even equaling human performance.

As these vision-based loT devices become more mainstream, they will need to execute not one, but multiple deep learning models to fulfil business use-cases. For example, a practical wearable device to support vision-impaired users might need to assist the user in recognizing faces, detecting everyday objects (e.g. chair, car, phone), detecting gender and detecting age of people they are meeting. For these use-cases, the device will have to run multiple deep models which can do face recognition, object recognition, gender and age detection etc. Moreover, due to issues of latency, bandwidth and more importantly, user privacy - it is desirable to execute these multiple deep learning models locally on the wearable device, rather than offloading them to the cloud.

However, wearable devices have limited runtime memory (typically less than 1 GB), but the deep learning vision models to be executed on the wearable are large in size (e.g., a popular object recognition model is nearly 500 MB in size) and are increasing becoming more complex and memory intensive. This means that in most cases, loading and executing multiple deep learning models on wearables is infeasible, and the problem is likely to become even more prominent as deep learning models become more complex (i.e., more layers are added to the model).

Broadly, there are two sets of approaches used to address the issue of model size on processing resources-constrained devices:
1) Model Compression: In this approach, size of the deep learning models is reduced by adopting a variety of techniques such as weight factorization, convolution separation and precision scaling. The overall effect is that as the models become smaller in size, more models can be loaded into the memory. The downside of these approaches is that compression results in loss of accuracy, and it is possible that even the compressed models do not fit into the memory together.
2) Sequential Execution: The idea is to load the models one by one into the memory. First, model A is loaded into the memory and executed; then model B...and so on. This way, at any given time, memory resources to load just one model are required by the system. There are two limitations of this approach: it is possible that even a single model may be too large to load into the runtime memory, and the paging of models in and out of memory consumes significant time, thereby increasing the overall inference time of the system.

RHU MINSOO ET AL "vDNN Virtualized Deep Neural networks", 2016, describes offloading features maps when training a CNN.

NICHOLAS LANE ET AL "DXTK: Enabling Resource-efficient Deep Learning on Mobile and Embedded Devices with the DeepX Toolkit", 2016, describes optimization techniques aiming to allow the execution of neural networks on resources constrained devices.

### SUMMARY

It is thus an object of embodiments of the present invention to propose methods and devices for analyzing sensor data, which do not show the inherent shortcomings of the prior art.

The invention is set out in the appended set of claims.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a structural block diagram of an analyzing device, and
Figures 2 and 3 are flowcharts of a method for analyzing sensor data executed by the analyzing device of Figure 1.

### DESCRIPTION OF EMBODIMENTS

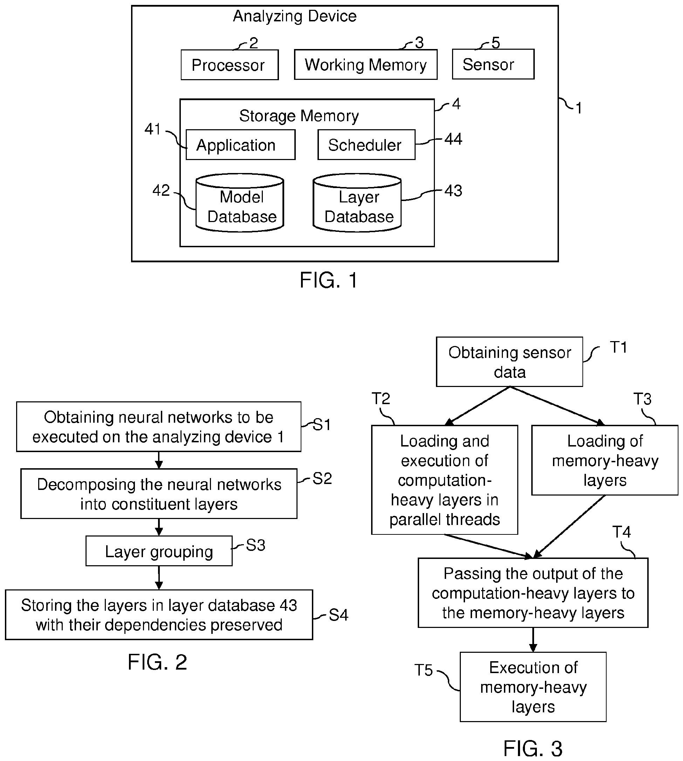

**Figure 1** is a block diagram of an analyzing device 1 for analyzing sensor data. The analyzing device 1 comprises a processor 2, a first memory 3, a second memory 4 and one or more sensors 5.

The processor 2 is configured for accessing instructions and data stored in the first memory 3 and the second memory 4, and for executing said instructions. The processor 2 is capable of executing multiple threads of instructions in parallel. Multithreading is provided for example by time interleaving and/or the use of multiple cores.

The first memory 3 and the second memory 4 are configured for storing instructions and data. The first memory 3 has a smaller size than the second memory 4, and the processor 2 can access the first memory 3 with a lower latency than the second memory 4. In some embodiment, the first memory 3 is a volatile memory and the second memory 4 is a non-volatile memory. Accordingly, for executing a computer program stored in the second memory 4, the processor 2 typically loads instructions and data from the second memory 4 to the first memory 3, and then executes the instructions and uses the data from the first memory 3.

The first memory 3 may be referred to as working memory, cache, RAM... and the second memory 4 may be referred to as device storage, disk...

A sensor 5 is configured for providing sensor data. Examples of sensor include a microphone for providing audio data, a camera for providing image data (static or video), an accelerometer for providing movement data, a temperature sensor, a location component such as GPS module, a communication interface (Wi-Fi, cell phone...), etc.

The second memory 4 stores an application 41, a model database 42, a layer database 43 and a scheduler 44.

The application 41 is a computer program comprising instructions for providing a service to the user of the analyzing device 1. The service involves analyzing the sensor data provided by one or more sensors 5 and providing analysis resu Its.

The model database 42 stores a plurality of trained machine learning models. More specifically, the model database 42 stores a plurality of neural networks, for example a plurality of convolution neural networks (CNN). A neural network specifies a plurality of activation functions and weights arranged in layers. A neural network may include layers of various types: convolution layer, full-connected layer... A neural network may be stored in a format associated with a known framework (e.g. Torch, TensorFlow, Caffe), wherein layers are labelled according to their type.

The application 41 uses the neural networks of the model database 42 for analyzing the sensor data. Actually, although shown as distinct from the application 41 on Figure 1, the model database 42 may be part of the application 41 in some embodiments.

The scheduler 44 is a computer program for controlling the execution of the neural networks used by the application 41. More specifically, for the respective neural networks, the scheduler 44 classifies the layers into first set of layers and a second set of layers, and controls the execution of the neural networks for executing the layers of the first sets and, in parallel, loading the layers of the second sets from the second memory 4 to the first memory 3. The scheduler 44 uses the layer database 43. The functioning of the scheduler 44 is described in more details with reference to Figures 2 and 3.

The scheduler 44 may be a software middleware that can be installed on the analyzing device 1. It exposes Application Programming Interfaces (APIs) through which applications can provide a series of models and data to it, and obtain the final inference (again through an API call).

In another embodiment, the scheduler 44 may be bundled in the Operating System (OS) of the analyzing device 1 where running multiple deep learning models is a core functionality provided by the OS.

In another embodiment, the scheduler 44 can also be implemented by the application 41 which is running the deep models.

Figures 2 and 3 are flowcharts of a method for analyzing data, executed by the analyzing device 1. More specifically, Figure 2 illustrates a model decomposition and layer pooling process, and Figure 3 illustrates an inference process.

In the model decomposition and layer pooling process of **Figure 2****,** the analyzing device 1 classifies the layers of a neural network into a first set of layers and a second set of layers. The first set of layers include computation-heavy layers, and the second set of layers include memory-heavy layers. The second set of layers follows the first set of layers. Typically, convolution layers are computation-heavy layers and fully-connected layers are memory-heavy layers, and a convolution neural networks comprises convolution layers followed by fully-connected layers. The analyzing device 1 performs this classification for the respective neural networks.

The steps S1 to S4 of Figure 2 may correspond to the execution, by the processor 2, of the scheduler 44. For example, through an API call from the application 41, the scheduler 44 accepts the neural networks to be executed (Step S1).

Then, the scheduler 44 decomposes the neural networks into constituent layers (step S2). More specifically, the neural networks are decomposed into their constituent layers, and the layers are put into a 'Layer pool' while preserving the interlayer dependencies. For example, if layer 1 is supposed to be executed before layer 2, then such dependencies are stored in the layer pool.

Then, the layers are grouped into a first set and a second set (step S3). The layers in the pool are grouped into two categories: computation-heavy layers (e.g., convolution layers, which require low memory but are computationally demanding) and memory-heavy layers (e.g., fully connected (FC) layers which are low in computations but requiring high memory).

Finally, the layers are stored in the layer database 43 with their dependencies preserved (step S4). The individual layers can be stored in the layer database 43 in a common data structure format known as 'Tensor'. It is a widely used data structure to store multi-dimensional arrays and matrices. The dependencies between the layers can be preserved using any FIFO data structure (e.g., a queue). For each model, when it is decomposed into the constituent layers, each layer is assigned a unique ID, and these layer ids are put into a queue. Thereafter at runtime, the layer IDs are de-queued one at a time, the corresponding layers are loaded into the first memory 3 and executed on the input data.

In other embodiments, classifying the layers of a neural network into a first set of layers and a second set of layers comprises identifying a limit between the first set and the second set. In that case, duplicate storing of the neural network in the model database 42 and in the layer database 43 is not required.

The classifying the layers of a neural network into a first set of layers and a second set of layers may be executed in response to determining that the neural networks are expected to be executed. This may be for example in response to installing the application 41 on the analyzing device 1 or otherwise obtaining the neural networks, or in response to launching the execution of the application 41.

In the inference process of **Figure 3****,** the analysis device 1 determines respective analysis results by processing the sensor data with the neural networks.

More specifically, the analysis device 1 obtains sensor data (step T1) on which inferences have to be made. In some embodiments, the analysis device 1 performs some pre-processing on the sensor data before executing the neural networks. For example, in the case of an image, wherein the input raw image of all the neural networks models is identical, i.e., the current image captured by the camera, the image is first pre-processed to convert it into a format expected by all the models. This could involve steps like mean centering and variance scaling.

Then, the analysis device 1 performs the following operations in parallel:
- For the respective neural networks, the analysis device 1 load the first sets of layers from the second memory 4 to the first memory 3, and execute them. More specifically, for a given neural network, the analysis device 1 launches a corresponding "loading and execution" thread for of the associated first set of layers.
- For the respective neural networks, the analysis device 1 loads the second sets of layers from the second memory 4 to the first memory 3 (step T3). More specifically, the analysis device 1 launches one or more "loading" threads for loading the second sets of layers.

Accordingly, the processor 2 executes in parallel, for the respective neural networks:
- a first thread which comprises loading said first set of layers in the first memory 3 and executing said first set of layers, and
- a second thread which comprises loading said second set of layers in the first memory 3.

After finishing execution of a "loading and execution" thread for a neural network, the analysis device 2 passes the output of the last layer of the first set to the first layer of the corresponding second set, which is already loaded in the first memory 3 (step T4). Indeed, by the time the thread performing the computation-heavy operations (e.g. convolution) finishes, memory-heavy layers (e.g. fully connected layers) are already in the memory. As such, the convolution thread simply passes its output data to the first fully connected layer as input. In the unlikely scenario where the first fully-connected layer is not completely loaded into the first memory 3 when the convolution operation finishes, the convolution execution thread waits for a prespecified amount of time until the fully-connected layer is loaded.

Then, for the respective neural networks, the analysis device 1 execute the second set of layers and generates an analysis result (step T5).

Steps T1 to T5 may involve interaction between the application 41 and the scheduler 44. For example, the application 41 obtains and pre-processes the sensor data (Step T1), the passes the pre-processed sensor data to the scheduler 44. The scheduler is responsible for controlling execution of the neural networks on the pre-processed sensor data (step T2 to T5). Finally, the application 41 obtains and uses the analysis results determined at step S5. For example, the application 41 outputs (e.g. display and/or audio) the analysis results, stores the analysis results, send the analysis results...

In some embodiments, the scheduler 44 performs dynamic runtime scheduling in function of available system resources. More specifically, for example, as the analysis device 1 is running the layers in parallel threads, the actual creation of a thread can be controlled dynamically based on the available system resources. For example, in the case of data-loading thread, the scheduler 44 look at the available runtime memory (RAM) before spawning a thread. If the available memory (e.g., 50MB) is less than the size of the layer to be loaded (e.g., 100 MB) into the memory, the scheduler 44 does not start a thread and instead wait for other threads to free up memory.

Similarly, the scheduler 44 can look into the CPU utilization on the analyzing device 1 to control the number of convolution-execution threads. If the CPU utilization is less than 100%, we may spawn another convolution thread. Otherwise, the scheduler waits for another opportune time to start a thread.

In the analyzing device 1, the parallel execution of multiple neural networks is performed by loading into the first memory 3 and executing computation-heavy layers and, in parallel, loading memory-heavy layers into the first memory 3. Accordingly, the two types of costly operations involved in running a neural network, for example a convolution neural network, are scheduled in parallel. This reduce the inference time.

Moreover, by adopting a layer-based approach rather than a full model approach, loading of a full model in the first memory 3 is not required. Accordingly, the parallel execution of multiple neural networks is possible on a resource-constrained device, typically on an analyzing device 1 wherein the size of the first memory 3 is smaller than the size of the neural networks.

To improve the execution of neural networks on the analyzing device 1, other techniques could be used in addition, such as layer compression, caching of fully-connected layers...

In an example embodiment, the analyzing device 1 is a camera-based wearable device used to offer assistance to one or more vision-impaired users. The goal of this device could be to analyze the raw images captured by a camera at regular intervals (e.g., every 1 min), and provide assistance to the user. We assume that the device provide five kinds of analyses on the image: face recognition, detecting objects, and detecting the age, gender, and emotion of a person in the image. For each of these applications, the device will run a separate CNN on the raw image data and come up with an inference (e.g., the person is Male, 30-40 years old, his emotion is Happy).

State-of-the-art wearable SoCs typically have around 750MB of available runtime memory, and the CNN models are around 300MB in size (on average). Clearly, fitting the five models into the runtime memory is currently not feasible, and this problem is likely to get more severe in the future as CNN model sizes increase (as more layers are added).

However, the layer-based approach and parallel execution and loading technique described above allow running the five models in parallel in the analyzing device 1.

It is to be remarked that the functions of the various elements shown in the figures may be provided through the use of dedicated hardware as well as hardware capable of executing software in association with appropriate software. When provided by a processor, the functions may be provided by a single dedicated processor, or by a single shared processor. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represent various processes which may be substantially represented in computer readable medium and so executed by a computer or processor, whether or not such computer or processor is explicitly shown.

Embodiments of the method can be performed by means of dedicated hardware and/or software or any combination of both.

While the principles of the invention have been described above in connection with specific embodiments, it is to be clearly understood that this description is made only by way of example and not as a limitation on the scope of the invention, as defined in the appended claims.

## Claims

1. Method for analyzing sensor data, executed by an analyzing device (1) comprising a processor (2), a first memory (3) and a second memory (4), wherein the processor (2) is capable of executing multiple threads in parallel based on instructions and/or data stored in the first memory (3),
wherein the second memory (4) stores a plurality of neural networks, a neural network specifying successive layers, wherein at least one of said neural networks is a convolution neural network comprising convolution layers followed by fully-connected layers,
the method comprising determining analysis results by processing the sensor data with the neural networks,
wherein processing the sensor data with the neural networks comprises, for the at least one of said neural networks:
- classifying (S1-S4) the layers of the at least one of said neural networks into a first set of layers and a second set of layers, wherein the second set of layers follows the first set of layers, wherein said first set includes said convolution layers and said second set includes said fully-connected layers,
- executing (T2, T3) in parallel, by the processor (2):
- a first thread which comprises loading said first set of layers in the first memory (3) and executing said first set of layers, and
- a second thread which comprises loading said second set of layers in the first memory (3),
- after finishing execution of the first thread, executing (T5) the second set of layers.

2. Method according to of claim 1, wherein the size of said first memory (3) is lower than the size of said neural networks.

3. Method according to one of claims 1 to 2, wherein the second memory (4) stores said neural networks in a first format, the method comprising converting said neural networks in a second format by decomposing (S2) said neural networks into constituent layers, and storing (S4) said neural networks in said second format in the second memory.

4. Method according to one of claims 1 to 3, comprising executing the second set of layers for the plurality of neural networks after finishing execution of the first thread for all the neural networks.

5. Method according to one of claims 1 to 4, wherein said analyzing device (1) comprises at least one sensor (5) for providing said sensor data.

6. Method according to claim 5, wherein said at least one sensor (5) includes a camera, said sensor data including at least one image, wherein determining analysis results by processing the sensor data with the neural networks comprises identifying two or more of: an object in the image, a face in the image, a gender of a person in the image, an age of a person in the image, an emotion of a person in the image.

7. Analyzing device (1) for analyzing sensor data, comprising a processor (2), a first memory (3) and a second memory (4),
wherein the processor (2) is capable of executing multiple threads in parallel based on of instructions and/or data stored in the first memory (3), wherein the second memory (4) stores a plurality of neural networks, a neural network specifying successive layers, wherein at least one of said neural networks is a convolution neural network comprising convolution layers followed by fully-connected layers,
the analyzing device (1) comprising means (2, 3, 4, 5, 41, 44) configured for determining analysis results by processing the sensor data with the neural networks,
wherein processing the sensor data with the neural networks comprises, for the at least one of said neural networks:
- classifying (S1-S4) the layers of the at least one of said neural networks into a first set of layers and a second set of layers, wherein the second set of layers follows the first set of layers, wherein said first set includes said convolution layers and said second set includes said fully-connected layers,
- executing (T2, T3) in parallel, by the processor (2):
- a first thread which comprises loading said first set of layers in the first memory (3) and executing said first set of layers, and
- a second thread which comprises loading said second set of layers in the first memory (3),
- after finishing execution of the first thread, executing (T5) the second set of layers.

8. Analyzing device according to claim 7, wherein the first memory (3) has a smaller size than the second memory (4), and the processor (2) can access the first memory (3) with a lower latency than the second memory (4).

9. Computer program comprising instructions which, when the program is executed by the processor of the analyzing device of claim 7, cause said processor to perform the steps of the method according to one of claims 1 to 6.

## Patentansprüche

1. Verfahren zum Analysieren von Sensordaten, das von einer Analysevorrichtung (1) ausgeführt wird, die einen Prozessor (2), einen ersten Speicher (3) und einen zweiten Speicher (4) umfasst,
wobei der Prozessor (2) in der Lage ist, auf Basis von Anweisungen und/oder Daten, die im dritten Speicher (3) gespeichert sind, mehrere Threads parallel auszuführen,
wobei im zweiten Speicher (4) eine Vielzahl von neuronalen Netzwerken gespeichert sind, wobei ein neuronales Netzwerk aufeinanderfolgende Schichten spezifiziert, wobei mindestens eines der neuronalen Netzwerke ein faltendes neuronales Netzwerk ist, das Faltungsschichten umfasst, denen vollständig verbundene Schichten folgen,
wobei das Verfahren das Bestimmen von Analyseergebnissen durch Verarbeiten der Sensordaten mit den neuronalen Netzwerken umfasst,
wobei das Verarbeiten der Sensordaten mit den neuronalen Netzwerken für das mindestens eine der neuronalen Netzwerke Folgendes umfasst:
- Klassifizieren (S1-S4) der Schichten des mindestens einen der neuronalen Netzwerke in einen ersten Satz von Schichten und einen zweiten Satz von Schichten, wobei der zweite Satz von Schichten dem ersten Satz von Schichten folgt, wobei der erste Satz die Faltungsschichten beinhaltet und der zweite Satz die vollständig verbundenen Schichten beinhaltet,
- paralleles Ausführen (T2, T3) von Folgendem durch den Prozessor (2):
- einen ersten Thread, der das Laden des ersten Satzes von Schichten in den ersten Speicher (3) und das Ausführen des ersten Satzes von Schichten umfasst, und
- einen zweiten Thread, der das Laden des zweiten Satzes von Schichten in den ersten Speicher (3) umfasst,
- nach Beenden der Ausführung des ersten Threads Ausführen (T5) des zweiten Satzes von Schichten.

2. Verfahren nach Anspruch 1, wobei die Größe des ersten Speichers (3) geringer ist als die Größe der neuronalen Netzwerke.

3. Verfahren nach einem der Ansprüche 1 bis 2, wobei die neuronalen Netzwerke im zweiten Speicher (4) in einem ersten Format gespeichert sind, wobei das Verfahren das Konvertieren der neuronalen Netzwerke durch Zerlegen (S2) der neuronalen Netzwerke in konstituierende Schichten in ein zweites Format und das Speichern (S4) der neuronalen Netzwerke im zweiten Format im zweiten Speicher umfasst.

4. Verfahren nach einem der Ansprüche 1 bis 3, das nach Beenden der Ausführung des ersten Threads für alle neuronalen Netzwerke das Ausführen des zweiten Satzes von Schichten für die Vielzahl von neuronalen Netzwerken umfasst.

5. Verfahren nach einem der Ansprüche 1 bis 4, wobei die Analysevorrichtung (1) zum Bereitstellen der Sensordaten mindestens einen Sensor (5) umfasst.

6. Verfahren nach Anspruch 5, wobei der mindestens eine Sensor (5) eine Kamera beinhaltet, wobei die Sensordaten mindestens ein Bild beinhalten, wobei das Bestimmen von Analyseergebnissen durch Verarbeiten der Sensordaten mit den neuronalen Netzwerken das Identifizieren von zwei oder mehreren von Folgendem umfasst: einem Objekt im Bild, einem Gesicht im Bild, einem Geschlecht einer Person im Bild, einem Alter einer Person im Bild, einer Emotion einer Person im Bild.

7. Analysevorrichtung (1) zum Analysieren von Sensordaten, die einen Prozessor (2), einen ersten Speicher (3) und einen zweiten Speicher (4) umfasst,
wobei der Prozessor (2) in der Lage ist, auf Basis von Anweisungen und/oder Daten, die im dritten Speicher (3) gespeichert sind, mehrere Threads parallel auszuführen,
wobei im zweiten Speicher (4) eine Vielzahl von neuronalen Netzwerken gespeichert sind, wobei ein neuronales Netzwerk aufeinanderfolgende Schichten spezifiziert, wobei mindestens eines der neuronalen Netzwerke ein faltendes neuronales Netzwerk ist, das Faltungsschichten umfasst, denen vollständig verbundene Schichten folgen,
wobei die Analysevorrichtung (1) Mittel (2, 3, 4, 5, 41, 44) umfasst, die zum Bestimmen von Analyseergebnissen durch Verarbeiten der Sensordaten mit den neuronalen Netzwerken ausgelegt sind,
wobei das Verarbeiten der Sensordaten mit den neuronalen Netzwerken für das mindestens eine der neuronalen Netzwerke Folgendes umfasst:
- Klassifizieren (S1-S4) der Schichten des mindestens einen der neuronalen Netzwerke in einen ersten Satz von Schichten und einen zweiten Satz von Schichten, wobei der zweite Satz von Schichten dem ersten Satz von Schichten folgt, wobei der erste Satz die Faltungsschichten beinhaltet und der zweite Satz die vollständig verbundenen Schichten beinhaltet,
- paralleles Ausführen (T2, T3) von Folgendem durch den Prozessor (2):
- einen ersten Thread, der das Laden des ersten Satzes von Schichten in den ersten Speicher (3) und das Ausführen des ersten Satzes von Schichten umfasst, und
- einen zweiten Thread, der das Laden des zweiten Satzes von Schichten in den ersten Speicher (3) umfasst,
- nach Beenden der Ausführung des ersten Threads Ausführen (T5) des zweiten Satzes von Schichten.

8. Analysevorrichtung nach Anspruch 7, wobei der erste Speicher (3) eine kleinere Größe aufweist als der zweite Speicher (4) und der Prozessor (2) auf den ersten Speicher (3) mit einer geringeren Latenz zugreifen kann als auf den zweiten Speicher (4).

9. Computerprogramm, das Anweisungen umfasst, die, wenn das Programm vom Prozessor der Analysevorrichtung von Anspruch 7 ausgeführt wird, den Prozessor veranlassen, die Schritte des Verfahrens nach einem der Ansprüche 1 bis 6 durchzuführen.

## Revendications

1. Procédé d'analyse de données de capteur, exécuté par un dispositif d'analyse (1) comprenant un processeur (2), une première mémoire (3) et une deuxième mémoire (4),
dans lequel le processeur (2) est en mesure d'exécuter de multiples fils en parallèle sur la base d'instructions et/ou de données stockées dans la première mémoire (3),
dans lequel la deuxième mémoire (4) stocke une pluralité de réseaux neuronaux, un réseau neuronal spécifiant des couches successives, dans lequel au moins un desdits réseaux neuronaux est un réseau neuronal de convolution comprenant des couches de convolution suivies de couches entièrement connectées,
le procédé comprenant la détermination de résultats d'analyse en traitant les données de capteur avec les réseaux neuronaux,
dans lequel le traitement des données de capteur avec les réseaux neuronaux comprend, pour le au moins un desdits réseaux neuronaux, les étapes consistant à :
- classer (S1-S4) les couches du au moins un desdits réseaux neuronaux en un premier ensemble de couches et un deuxième ensemble de couches, dans lequel le deuxième ensemble de couches suit le premier ensemble de couches, dans lequel ledit premier ensemble comporte lesdites couches de convolution et ledit deuxième ensemble comporte lesdites couches entièrement connectées,
- exécuter (T2, T3) en parallèle, par le processeur (2) :
- un premier fil qui comprend le chargement dudit premier ensemble de couches dans la première mémoire (3) et l'exécution dudit premier ensemble de couches, et
- un deuxième fil qui comprend le chargement dudit deuxième ensemble de couches dans la première mémoire (3),
- après avoir terminé l'exécution du premier fil, exécuter (T5) le deuxième ensemble de couches.

2. Procédé selon la revendication 1, dans lequel la taille de ladite première mémoire (3) est inférieure à la taille desdits réseaux neuronaux.

3. Procédé selon l'une des revendications 1 à 2, dans lequel la deuxième mémoire (4) stocke lesdits réseaux neuronaux dans un premier format, le procédé comprenant la conversion desdits réseaux neuronaux en un deuxième format en décomposant (S2) lesdits réseaux neuronaux en couches constitutives, et le stockage (S4) desdits réseaux neuronaux audit deuxième format dans la deuxième mémoire.

4. Procédé selon l'une des revendications 1 à 3, comprenant l'exécution du deuxième ensemble de couches pour la pluralité de réseaux neuronaux après avoir terminé l'exécution du premier fil pour tous les réseaux neuronaux.

5. Procédé selon l'une des revendications 1 à 4, dans lequel ledit dispositif d'analyse (1) comprend au moins un capteur (5) pour fournir lesdites données de capteur.

6. Procédé selon la revendication 5, dans lequel ledit au moins un capteur (5) comporte une caméra, lesdites données de capteur comportant au moins une image, dans lequel la détermination de résultats d'analyse en traitant les données de capteur avec les réseaux neuronaux comprend l'identification de deux ou plus parmi : un objet dans l'image, un visage dans l'image, un sexe d'une personne dans l'image, un âge d'une personne dans l'image, une émotion d'une personne dans l'image.

7. Dispositif d'analyse (1) pour analyser des données de capteur, comprenant un processeur (2), une première mémoire (3) et une deuxième mémoire (4),
dans lequel le processeur (2) est en mesure d'exécuter de multiples fils en parallèle sur la base d'instructions et/ou de données stockées dans la première mémoire (3),
dans lequel la deuxième mémoire (4) stocke une pluralité de réseaux neuronaux, un réseau neuronal spécifiant des couches successives, dans lequel au moins un desdits réseaux neuronaux est un réseau neuronal de convolution comprenant des couches de convolution suivies de couches entièrement connectées,
le dispositif d'analyse (1) comprenant des moyens (2, 3, 4, 5, 41, 44) configurés pour déterminer des résultats d'analyse en traitant les données de capteur avec les réseaux neuronaux,
dans lequel le traitement des données de capteur avec les réseaux neuronaux comprend, pour le au moins un desdits réseaux neuronaux, les étapes consistant à :
- classer (S1-S4) les couches du au moins un desdits réseaux neuronaux en un premier ensemble de couches et un deuxième ensemble de couches, dans lequel le deuxième ensemble de couches suit le premier ensemble de couches, dans lequel ledit premier ensemble comporte lesdites couches de convolution et ledit deuxième ensemble comporte lesdites couches entièrement connectées,
- exécuter (T2, T3) en parallèle, par le processeur (2) :
- un premier fil qui comprend le chargement dudit premier ensemble de couches dans la première mémoire (3) et l'exécution dudit premier ensemble de couches, et
- un deuxième fil qui comprend le chargement dudit deuxième ensemble de couches dans la première mémoire (3),
- après avoir terminé l'exécution du premier fil, exécuter (T5) le deuxième ensemble de couches.

8. Dispositif d'analyse selon la revendication 7, dans lequel la première mémoire (3) a une taille plus petite que la deuxième mémoire (4), et le processeur (2) peut accéder à la première mémoire (3) avec une latence plus faible que la deuxième mémoire (4).

9. Programme informatique comprenant des instructions qui, lorsque le programme est exécuté par le processeur du dispositif d'analyse selon la revendication 7, amènent ledit processeur à réaliser les étapes du procédé selon l'une des revendications 1 à 6.
